# EUROPEAN PATENT SPECIFICATION

(11) **EP 2 439 966 B1**
(45) Date of publication and mention of the grant of the patent: **01.08.2018**
(21) Application number: 09845434.1
(22) Date of filing: 19.10.2009
(51) Int. Cl.: H04W 4/12, H04W 4/18, H04L 12/58

(54) **INFORMATION PROCESSING SYSTEM, COMMUNICATION SYSTEM AND COMMUNICATION METHOD**
INFORMATIONSVERARBEITUNGSSYSTEM, KOMMUNIKATIONSSYSTEM UND KOMMUNIKATIONSVERFAHREN
SYSTÈME DE TRAITEMENT D'INFORMATIONS, SYSTÈME DE COMMUNICATION ET PROCÉDÉ DE COMMUNICATION

(30) Priority: 04.06.2009 CN 200910086519
(43) Date of publication of application: 11.04.2012
(73) Proprietor: ZTE Corporation, Shenzhen, Guangdong 518057 (CN)
(72) Inventor: TAO, Haiping, Shenzhen Guangdong 518057 (CN); WANG, Liangjia, Shenzhen Guangdong 518057 (CN); LV, Weichu, Shenzhen Guangdong 518057 (CN)
(74) Representative: Schröer, Gernot H.
(86) International application number: PCT/CN2009/074517
(87) International publication number: WO 2010/139154

(56) References cited:
- EP-A1- 1 798 933
- CN-A- 101 018 349
- CN-A- 101 115 050
- CN-A- 101 431 733
- CN-A- 101 583 104
- KR-A- 20040 006 174
- US-A1- 2007 123 277

## Description

### Technical Field

The present invention relates to the mobile communication technology field, in particularly, to an information processing system applied on a computer so that a registered mobile-phone user can communicate on the computer with other mobile-phone users, and to a communication system and a communication method for communication applying this information processing system.

### Background of the Related Art

Recently, China Mobile has released an instant messaging product integrating business applications and entertainment functions and providing mobile phone applications and in-depth intercommunication between mobile phones and internet, which is Fetion service.

Fetion is a comprehensive communication service integrating multiple communication ways such as audio, message, short message and so on. A user can login the Fetion system either on a PC client or a mobile-phone client to communicate in the regular way of the short message with contacts in each client, using the powerful function of the existing mobile network to achieve the status of always-online and seamless communication.

However, the existing Fetion system uses the architecture of docking to the short message gateway in point of short message service. When user A sends a short message through a Fetion client to the mobile-phone of user B, the short message's calling number displayed is in the format of Fetion access number plus the phone number of user A. When the user B replies the short message, only if adding the Fetion access number before the phone number of the user A, the message can be returned to the Fetion client of the user A, or else if the Fetion access number is not added, the message will be sent to the user A's mobile-phone as a regular peer-to-peer short message.

Thus the defects of the existing Fetion system are: first, as the incorporation of the Fetion access number, the subscriber's sending and receiving of a short message by the Fetion service being not completely in the way of peer-to-peer; second, the experience of the short message service depending on a user's operation. If the user operates incorrectly, the seamless communication between the Fetion client and the mobile phone cannot be implemented, that is, if the user did not add the Fetion access number when sending a short message, the short message cannot arrive to the called Fetion client, instead it is sent to the called mobile phone directly.

Besides, the existing Fetion system cannot solve the problem that the the peer-to-peer short message initiated from a mobile phone cannot be received by a Fetion client. For example, in some special circumstances such as when a mobile phone of a called user runs out of its power or is forgotten to take, the called user hopes to receive the short message using the Fetion client, however, the Fetion system in the prior art cannot implement this function.

Thus as users of the Fetion service increase, the users expect better experiences in the usage. The above problem has been gradually drawing attention of the operators, and has been the problem which the communication operators are eager to solve currently.

US 2007/123277 A1 discloses a telecommunications system for communicating a Short Message Service message to a user equipment using a subscriber identity number terminating on an Internet Protocol network using an Internet Protocol, the system comprising a short message service center, a gateway mobile switching centre of an SMS network for communicating SMS messages, an Internet Protocol/SMS gateway for communicating between the SMS network and the IP network and a home location database for maintaining address data identifying a current location of a user equipment.

EP 1 798 933 A1 discloses a method for implementing a message service based on IP Multimedia Subsystem.

### Content of the Invention

The technical scheme of the present invention is to provide an information processing system, as well as a communication system and a communication method which perform the communication using the information process system as defined in the independent claims. Using the information processing system, the registered mobile-phone user that logs through the computer client not only can communicate on the computer client with other mobile-phone users without using the access number, but also can receive through the computer client the peer-to-peer short message that is sent by other mobile-phone users to the registered mobile-phone user's mobile phone.

To achieve the above target, an information processing system is provided. The information processing system comprises:
a handling subsystem, configured to handle a service of a registered mobile-phone user registering using a mobile-phone number information and send the mobile-phone number information to a short message processing center of a communication network to set a service registration mark in the short message processing center;
a protocol gateway subsystem, connected for communication to the short message processing center, and configured to: send to the short message processing center a short information message sent by the registered mobile-phone user on a computer client to another mobile-phone user; and receive from the short message processing center a short message sent by another mobile-phone user, wherein a destination receiver of the short message is determined by the short message processing center as the registered mobile-phone user; and
a service subsystem, configured to: mark, before the protocol gateway subsystem sends the short information message to the short message processing center, a calling number of the short information message as the mobile-phone number of the registered mobile-phone user; and obtain from the protocol gateway subsystem the short message sent by another mobile-phone user, determine a corresponding operation terminal of the registered mobile-phone user and display the short message on the corresponding operation terminal;
thereby supporting communication between the registered mobile-phone user on the computer client and another mobile-phone user;
the service subsystem is further configured to: determine whether the registered mobile-phone user logs on the computer client currently when obtaining from the protocol gateway subsystem the short message sent by another mobile-phone user, the service subsystem determines the computer client as the corresponding operation terminal if yes;
or else, the service subsystem determines the registered mobile-phone user's mobile phone as the corresponding operation terminal.
Preferably, in the information processing system, the protocol gateway subsystem is further configured to:
encode, before sending the short information message to the short message processing center, the short information message to be standard short message protocol information; and
decode, after receiving the short message sent by another mobile-phone user, the short message to be an internal message.
Preferably, in the information processing system, the information processing system further comprises:
a service platform subsystem, configured to coordinate duties of the handling subsystem, the protocol gateway subsystem and the service subsystem;
a background counting subsystem, configured to count the number of the registered mobile-phone users and quantity of the short information messages sent by the registered mobile-phone user; and
a bottom-layer support subsystem, configured to provide a operation platform for the handling subsystem, the protocol gateway subsystem, the service subsystem, the service platform subsystem and the background counting subsystem.
Preferably, in the information processing system, the handling subsystem, the protocol gateway subsystem, the service platform subsystem, the background counting subsystem and the bottom-layer support subsystem are established on a basis of a short message value-added service platform, wherein the service subsystem and the short message value-added service platform are docked to one another by an interface, or the service subsystem is also established on the basis of the short message value-added service platform.

Preferably, a communication system is also provided, applied for communication between a registered mobile-phone user on a computer client and another mobile-phone user and comprising:
a short message processing center, configured to forward information sent between the registered mobile-phone user and another mobile-phone user, and record mobile-phone number information of the registered mobile-phone user; and
an information processing system, wherein the information processing system comprises:
   a handling subsystem, configured to handle a service of the registered mobile-phone user registering using the mobile-phone number information and send the mobile-phone number information to the short message processing center;
   a protocol gateway subsystem, connected for communication to the short message processing center, and configured to: send to the short message processing center a short information message sent by the registered mobile-phone user through a computer client to another mobile-phone user; and receive from the short message processing center a short message, wherein a destination receiver of the short message is determined by the short message processing center as the registered mobile-phone user; and
   a service subsystem, configured to: mark, before the protocol gateway subsystem sends the short information message to the short message processing center, a calling number of the short information message as a mobile-phone number of the registered mobile-phone user; and acquire the short message from the protocol gateway subsystem, determine a corresponding operation terminal of the registered mobile-phone user, and display the short message on the corresponding operation terminal;
thereby supporting communication between the registered mobile-phone user on the computer client with another mobile-phone user.
Preferably, in the communication system, the service subsystem of the information processing system is further configured to:
determine whether the registered mobile-phone user logs on the computer client currently upon acquiring from the protocol gateway subsystem the short message sent by another mobile-phone user, and
determine the computer client as the corresponding operation terminal if yes; or else determine the registered mobile-phone user's mobile phone as the corresponding operation terminal.

Preferably, in the communication system, the short message processing center is further configured to:
receive the short message sent by another mobile-phone user;
determine whether the destination receiver of the short message is the registered mobile-phone user according to the mobile-phone number information recorded in the short message processing center,
send the short message to the protocol gateway subsystem of the information processing system using a standard short message protocol if yes;
or else, send the short message to the determination receiver's mobile phone directly.

The target of the invention is also achieved by a communication method, and the communication method comprises:
handling a service of the registered mobile-phone user registering using mobile-phone number information and sending the mobile-phone number information to a short message processing center of a communication network to record the mobile-phone number information;
acquiring a short information message that is sent by the registered mobile-phone user through a computer client to another mobile-phone user, marking a calling number of the short information message as a mobile-phone number of the registered mobile-phone user, and sending the short information message to the short message processing center through which the short information message is forwarded to another mobile-phone user;
receiving a short message sent by another mobile user and forwarded by the short message processing center, wherein a destination receiver of the short message is determined by the short message processing center as the registered mobile-phone user; and
determining a corresponding operation terminal of the registered mobile-phone user, and displaying the short message on the corresponding operation terminal, wherein, the corresponding operation terminal comprises a mobile phone and the computer client of the registered mobile-phone user;
   thereby implementing communication between the registered mobile-phone user on the computer client and another mobile-phone user ,wherein the step of determining the corresponding operation terminal comprises:
determining whether the registered mobile-phone user is online on the computer client currently, the corresponding operation terminal being the computer client if yes; or else, the corresponding operation terminal as the registered mobile-phone user's mobile phone;
thereby the short message is sent to the corresponding operation terminal.

Preferably, before the step of sending the short information message to the short message processing center, the communication method further comprises: encoding the short information message to be standard short message protocol information.

Preferably, before the step of receiving the short message sent by another mobile-phone user and forwarded by the short message processing center, the communication method further comprises:
the short message processing center receiving the short message sent by another mobile user.

Preferably, in the communication method, the step of determining the destination receiver of the short message comprises:
the short message processing center determining whether the destination receiver of the short message is the registered mobile-phone user according to the mobile-phone number information,
the short message processing center forwarding the short message sent by another mobile-phone user if yes;
or else, the short message processing center sending the short message to the destination receiver's mobile phone directly.
Preferably, after the step of receiving the short message sent by another mobile-phone user and forwarded by the short message processing center, the communication method further comprises:
decoding the short message so as to convert the short message into an internal message.

At least one of the technical solutions of the present invention has the following beneficial effects: the information processing system achieves the advantage of acquiring peer-to-peer short messages from the short message processing center by being established on the short message value-added service platform directly docked to the short message processing center, making it unnecessary to add access number when the registered mobile-phone user logging on the information processing system through the PC client intercommunicates with other mobile-phone users; the peer-to-peer short message sent from a mobile-phone user's mobile phone to a registered mobile-phone user can be received through the registered mobile-phone user's PC client; the service architecture with a separate external interface is designed, so that the existing Fetion system can be docked to with the interface, thereby solving the defects in the usage of the existing Fetion system and decreasing the impact of changes of service architecture on the existing service itself.

### Brief Description of Drawings

- FIG. 1: is a structure diagram of the communication system according to an embodiment of the present invention;
- FIG. 2: is a structure diagram of the information processing system according to an embodiment of the present invention;
- FIG. 3: is a flow chart of the communication system processing a short information message according to an embodiment of the present invention when a registered mobile-phone user sends the short information message through a PC client to the called mobile-phone client; and
- FIG. 4: is a flow chart of the communication system processing a short information message according to an embodiment of the present invention when a mobile-phone user sends the short information message to another mobile-phone user.

### Preferred Embodiments of the Present Invention

To make the purpose, technical scheme and the advantages of the present invention more clear, the present invention will be described in detail in conjunction with accompanying drawings and embodiments as follows.

The information processing system and the communication system and method performing communication using the information processing system according to an embodiment of the present invention are directed towards the defects existed in the usage of the existing Fetion system. The information processing system provided supports the intercommunication between a mobile phone and the internet without access number, so that a registered mobile-phone user logging onto the information processing system can intercommunicate on a personal computer (PC) client with other mobile-phone users, and the peer-to-peer short message sent from the mobile phone of the mobile-phone user to a registered mobile-phone user is received by the registered mobile-phone user's PC client.

The application operation terminal of the information processing system according to an embodiment of the present invention is a computer. A mobile-phone user registers to the information system using the mobile-phone number. When the registered mobile-phone user login the information processing system through the PC client to communicate with other mobile-phone users, the information processing system is in charge of the user's registration, login, information processing and forwarding, wherein, the information processing system is docked to a short message processing center of the communication network, so that the internet connected to the PC client could intercommunicate with the short message processing center.

In the embodiment of the present invention, the information processing system could be based on the short message value-added service platform, because the short message value- added service platform is platform system which can implement the peer-to-peer short message value-added service and is docked to the short message processing center of the communication network directly.

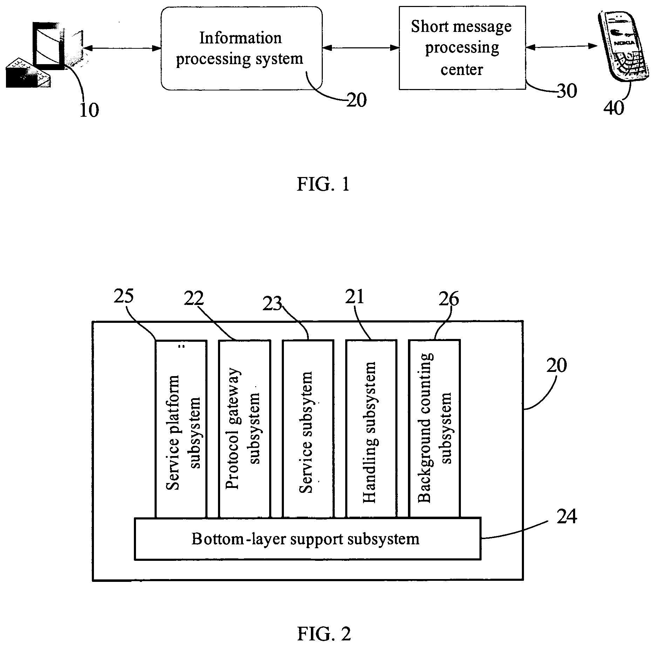

Next the information processing system as well as the communication system and communication method using the information processing system to communicate according to a preferred embodiment of the present invention will be described in detail. FIG.1 is a structure diagram of the communication system according to a preferred embodiment of the present invention, and FIG. 2 is a structure diagram of the information processing system according to an embodiment of the present invention.

As shown in FIG.1, the information processing system 20 is connected with the internet of the computer side 10, and the information processing system 20 is also docked to the short message processing center 30 of the IP communication network directly, where the information processing system 20 and the short message processing center 30 use the standard short message protocol (for example standard Short Message Peer to Peer (SMPP) protocol or extended SMPP protocol) to communicate and connect with each other. All the short messages sent by the mobile-phone user side 40 to the other mobile-phone users need be forwarded by the short message processing center 30, including the short message sending to the mobile-phone user side 40 and the short message sent by the mobile-phone user side 40. In order to distinguish the different message initiated by the mobile-phone user side and the PC client, a message initiated by the mobile-phone user side is called a short message, while a message initiated by the PC client is called a short information message.

In the structure of the communication system as shown in the FIG.1, in order that a registered mobile-phone user logging on the information processing system 20 could intercommunicate on the computer side 10 with the mobile-phone user side 40, and the communication between them is complemented without the access number, as shown in FIG. 2, the information processing system 20 comprises:
a handling subsystem 21, which is used to handle the service of a registered mobile-phone user using the mobile-phone number information to register and send the mobile-phone number information of the registered mobile-phone user to the short message processing center 30 to identify the registered mobile-phone user therein;
a protocol gateway subsystem 22, which connects for communication to the short message processing center 30, and is used to encode a short information message sent by a registered mobile-phone user to another mobile-phone user through a PC client into a standard short message protocol message, and then send it to the short message processing center 30; and is also used to receive from the short message processing center 30 a short message sent by another mobile-phone user, and decode the received short message and convert it to an internal message, where the destination receiver of the short message is determined as a registered mobile-phone user by the short message processing center 30.
a service subsystem 23, which is used to convert and forward the short information message and the short message among the mobile-phone users, including forwarding the short information message sent by the registered mobile-phone user through the PC client to another user's mobile-phone, and before which marking the calling number of the short information message as the mobile-phone number of the registered mobile-phone user, and sending through the protocol gateway subsystem 22 the short information message to the short message processing center 30, through which the short information message is sent to the corresponding mobile-phone side of the called user.

The service subsystem 23 is also used to forward a short message sent from a mobile-phone side of a calling user to a called registered mobile-phone user's PC client, where the short message sent from the calling user's mobile-phone side is forwarded to the service subsystem 23 through the short message processing center 30, and the service subsystem 23 determines the corresponding operation terminal of the called registered mobile-phone user and sends the short message to the corresponding operation terminal for display.

Specifically, when the service subsystem 23 receives the short message whose called side is the registered mobile-phone user forwarded by the short message processing center 30, the service subsystem 23 determines whether the called registered mobile-phone user is logged on the PC client currently, if yes, the service subsystem 23 sends the short message to the called registered mobile-phone user's PC client for display; or else, the service subsystem 23 notifies the short message processing center 30 through the protocol gateway subsystem 22 to send the short message to the called registered mobile-phone user directly for display.

With reference to the structure diagram of the communication system as shown in FIG.1, the short information messages sent to the mobile-phone user side 40 and the short messages initiated by the mobile-phone user side 40 are all required to be forwarded by the short message processing center 30. In the embodiment of the present invention, when the short message processing center 30 receives the short information message sent by the mobile-phone user side 40 to another mobile-phone user, the short message processing center 30 is also used to determine whether the called mobile-phone user is a registered mobile-phone user of the information processing system. If yes, the short information message is sent from the short message processing center 30 to the protocol gateway subsystem 22 using the standard short message protocol, decoded by the protocol gateway subsystem 22, sent to the service subsystem 23 after being converted into an internal message, and then sent to the called mobile-phone user's corresponding operation terminal by the service subsystem 23. Or else, the short message processing center 30 sends the short information message to the mobile-phone side of the called mobile-phone user directly.

In the preferred embodiment of the present invention, the information processing system 20 is based on the short message value-added service platform. In order to have the handling subsystem 21, the protocol gateway subsystem 22 and the service subsystem 23 implement the abovementioned functions on the short message value-added service platform, and to further improve the management function of the information processing system 20 for the registered mobile-phone user, the information processing system 20 further comprises:
a bottom-layer support subsystem 24, which is used to provide the running platform for the bottom-layer operation system of the short message value-added service platform, where the handling subsystem 21, the protocol gateway subsystem 22 and the service subsystem 23 run based on the platform provided by the bottom-layer support subsystem 24;
a service platform subsystem 25, which communicates with the service subsystem 23, the handling subsystem 21 and the protocol gateway subsystem 22 with the support of the bottom-layer support subsystem 24, and is in charge of invoking the internal database and dispatching task messages to the service subsystem 23, the handling subsystem 21 and the protocol gateway subsystem 22; moreover, the service platform subsystem 25 is also in charge of processing the handling request supported by non-standard protocol, converting the various handling requests to internal handling requests and sending them to the service subsystem 23 and the handling subsystem 21;
a background counting subsystem 26, which communicates with the handling subsystem 21, the protocol gateway subsystem 22, the service subsystem 23 and the service platform subsystem 25 simultaneously with the support of the bottom-layer support subsystem 24, and is used to count the various data information in the information processing system 20 including counting the number of the registered mobile-phone users and the quantity of the short messages sent by the registered mobile-phone users; the information processing system 20 is also used to report the abovementioned data using the standard Simple Network Management Protocol (SNMP).

In the information processing system 20 in the preferred embodiment of the present invention, optimally, the handling subsystem 21 is not only used to handle the registration of the mobile-phone users, but also is used to be responsible for configuration and cancellation operation for the registered mobile-phone user's personal user services, as well as the maintenance management of the background operation. The operation administrators of the information processing system 20 could perform the daily maintenance management using the background maintenance management portals provided by the handling subsystem 21, such as opening and closing an account in background, querying the history records and modification of the content of each notification.

Wherein, the ways for the registered mobile-phone users to register to the information processing system 20 include: the way of short message, the way of accounting, the way of self-served portals for WEB users, the way of background operation and maintenance and the way of file, where the way of short message is handled by implementing the conversion by the protocol gateway subsystem 22 from the external standard interface message into the internal handling request message, while the way of accounting, self-served portals for WEB users, background operation and maintenance and file are handled by implementing the conversion by the service platform subsystem 25 from external interface messages to internal handling request message.

In the abovementioned information processing system 20, the service platform subsystem 25, the protocol gateway subsystem 22, the service subsystem 23, the handling subsystem 21, the background counting subsystem 26 and the bottom-layer support subsystem 24 could be configured together on the short message value-added service platform. Besides, different from the other subsystems, the service subsystem 23 could be configured separately, being independent from the short message value-added service platform on which the other subsystems are by the way of interface and being docked to the short message value-added service platform.

The information processing system 20 in the preferred embodiment of the present invention is established on the basis of the short message value-added service platform. The information processing system 20 with the abovementioned structure is docked directly to the short message processing center 30, and can have the advantage of the peer-to-peer short message by using the short message value-added service platform, so that the peer-to-peer short message sent from a mobile phone of a mobile-phone user to another mobile phone of a mobile-phone user can arrive to the called registered mobile-phone user's PC client, and the communication between the mobile-phone side and the PC client does not require addition of the access number, so as to make the user's operation easy and convenient.

In addition, the information processing system 20 with the abovementioned structure could be configured in conjunction with the existing Fetion system. The information processing system 20 may be conjunct with the Fetion system by being embedded therein or connected thereto by interface, in order to solve the defects in the usage of the existing Fetion system: Fetion access number has to be used during the user applying the service, and the peer-to-peer short messages sent from the user's mobile-phone to a registered mobile-phone user cannot arrive the PC client of the registered mobile-phone user.

The preferred embodiment of the present invention in another aspect provides a communication system with an information processing system 20 whose structure is as shown in the FIG. 2. Using the communication system, the mobile phone could communicate with the internet so that a registered mobile-phone user who registers to the information processing system 20 could intercommunicate with a mobile-phone side of a user on a PC client without access number, and a peer-to-peer short message sent by a mobile-phone side of a user could be received by the PC client of the registered mobile-phone user.

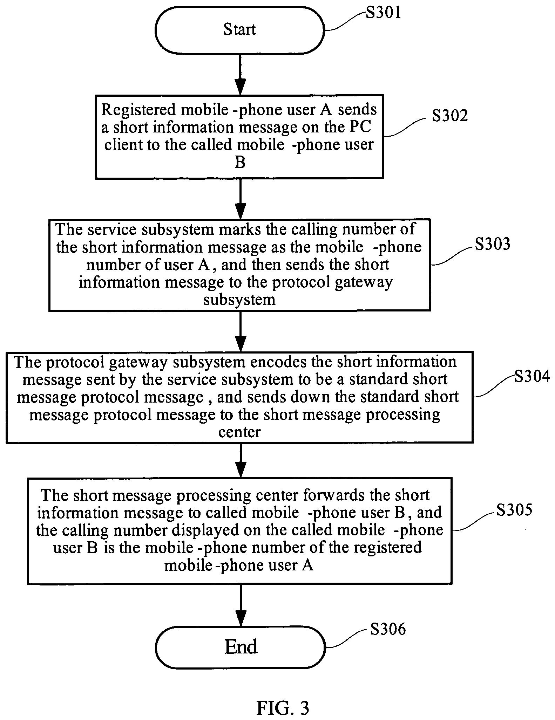

FIG. 3 is a flow chart of the communication system processing a short information message and displaying it on the called user's mobile-phone side when a registered mobile-phone user sends the short information message on a PC client to the mobile-phone side of the called user. The processing procedure starts from step S301 and comprises:
Step S302, a registered mobile-phone user A sending a short information message on a PC client of the information processing system 20 to a called mobile-phone user B;
Step S303, the service subsystem 23 converting the request information for sending the short information message into an internal message, marking the calling sender as the mobile-phone number of the registered mobile-phone user A and the called receiver as the mobile-phone number of the called mobile-phone user B, and then sending the internal message to the protocol gateway subsystem 22;
Step S304, the protocol gateway subsystem 22 encoding the internal message sent by the service subsystem 23, and sending down the encoded request information to the short message processing center 30 according to the standard short message protocol;
Step S305, the short message processing center 30 forwarding the short information message included in the request information to the called mobile-phone user B, and the calling number sending the short information message being displayed on the called mobile-phone user B's mobile-phone side as the mobile-phone number of the registered mobile-phone user A;
Step S306, end.

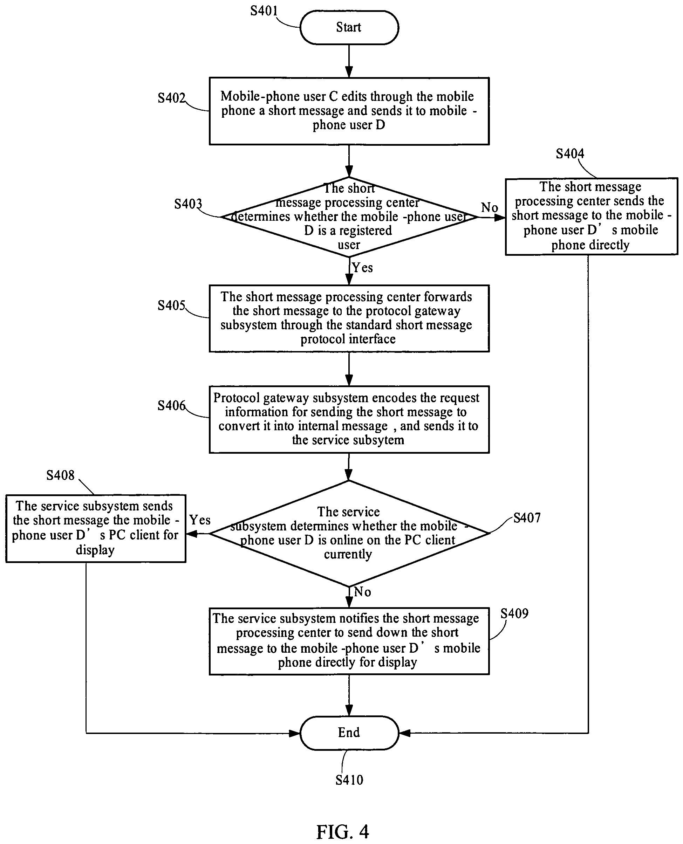

In another aspect, when a mobile-phone user C sends a short message on a mobile-phone side to another mobile-phone user D, the flow chart of the communication system in the preferred embodiment of the present invention processing the short message is as shown in FIG. 4. The processing flow starts from step S401 and comprises:
Step S402, a mobile-phone user C editing a short message on a mobile-phone side and sending it to a mobile-phone user D;
Step S403, the short message processing center 30 determining whether the mobile-phone user D is a registered mobile-phone user of the information processing system, if no, proceeding to step S404, otherwise, proceeding to step S405;
Step S404, the short message processing center 30 sending the short message directly to the mobile-phone user D's mobile-phone side for display, then proceeding to step S410;
Step S405, the short message processing center 30 forwarding the short message to the protocol gateway subsystem 22 of the information processing system 20 through the standard short message protocol interface;
Step S406, the protocol gateway subsystem 22 decoding the request information for sending the short message, converting it into an internal message and sending it to the service subsystem 23;
Step S407, the service subsystem 23 determining whether mobile-phone user D is online on the PC client, if yes, then proceeding to step S408, or else, proceeding to step S409;
Step S408, sending the short message to the mobile-phone user D's PC client for display through the protocol gateway subsystem 22, and proceeding to step S410; Step S409, the service subsystem 23 notifying the short message processing center 30 to send down the short message directly to the mobile-phone user D's mobile-phone for display, and proceeding to step S410;
Step S410, the flow ending.

The preferred embodiment of the present invention in another aspect provides a communication method, in which the information processing system docked to the short message processing center of the communication network is used so that a registered mobile-phone user who is registered on the information processing system on a PC client can intercommunicate with another mobile-phone user. The communication method comprises:
the information processing system handling the service of the registered mobile-phone user is registered using the mobile-phone number information and
sending the mobile-phone number information to a short message processing center to marking the registered mobile-phone user therein;
the registered mobile-phone user sending a short information message to another mobile-phone user, the information processing system obtaining the short information message sent by the registered mobile-phone user and marking the calling number of the short information message as the registered mobile-phone user's mobile-phone number and sending the short information message to the short message processing center;
the information processing system receiving from the short message processing center a short message sent by another mobile-phone user, and the destination receiver of the short message being determined by the short message processing center as the registered mobile-phone user, and the information processing system further determining the corresponding operation terminal of the registered mobile-phone user and displaying the short message on the corresponding operation terminal.

Wherein, the step of the information processing system determining the corresponding operation terminal of the registered mobile-phone user specifically includes:
the information processing system determining whether the registered mobile-phone user logs on the PC client currently, if yes, the information processing system determining the PC client as the corresponding operation terminal; or else,
the information processing system determining the registered mobile-phone user's mobile-phone side as the corresponding operation terminal.
Besides, before the information processing system receives from the short message processing center the short message sent by another mobile-phone user, the communication method further comprises:
the short message processing center receiving the short message sent by another mobile-phone user;
the short message processing center determining whether the destination receiver of the short message is the registered mobile-phone user according to the recorded mobile-phone number information, the short message processing center sending the short message to the protocol gateway subsystem according to the standard short message protocol if yes; or else, the short message processing center sending the short message to the destination receiver's mobile-phone side directly.

In conclusion, the application of the information processing system in the preferred embodiment of the present invention, as well as the communication system and the communication method using the information processing system to communicate have the following benefit effects:
1. When a registered mobile-phone user who logs on the information processing system through the PC client intercommunicates with other mobile-phone users, it is not necessary to add the access number;
2. The peer-to-peer short message sent from a mobile-phone user's mobile-phone side to a registered mobile-phone user could be received by the registered mobile-phone user's PC client, thus when a user's mobile phone runs out of power, the user could receive the short information message by logging on the PC client;
3. The service architecture with a separate external interface is designed so that the existing Fetion system can be docked to through the interface, thereby solving the defects in usage of the existing Fetion system by users, and decreasing the impact of the changing of the service architecture on the service itself.

The abovementioned is just the preferred embodiment of the present invention, it should be noted that, for the persons having ordinary skills in this technical field, some improvements and polishes may be made on the present invention without departing from the principle of the present invention, and these improvements and polishes shall be deemed as the protection scope of the present invention.

### Industrial Applicability

At least one of the technical solutions of the present invention has the following beneficial effects: the information processing system achieves the advantage of acquiring peer-to-peer short messages from the short message processing center by being established on the short message value-added service platform directly docked to the short message processing center, making it unnecessary to add access number when the registered mobile-phone user logging on the information processing system through the PC client intercommunicates with other mobile-phone users; the peer-to-peer short message sent from a mobile-phone user's mobile phone to a registered mobile-phone user can be received through the registered mobile-phone user's PC client; the service architecture with a separate external interface is designed, so that the existing Fetion system can be docked to with the interface, thereby solving the defects in the usage of the existing Fetion system and decreasing the impact of changes of service architecture on the existing service itself.

## Claims

1. An information processing system (20), comprising:
a handling subsystem (21), configured to handle a service of a registered mobile-phone user registering using a mobile-phone number information and send the mobile-phone number information to a short message processing center (30) of a communication network to set a service registration mark in the short message processing center (30);
a protocol gateway subsystem (22), connected for communication to the short message processing center (30), and configured to: send to the short message processing center (30) a short information message sent by the registered mobile-phone user on a computer client to another mobile-phone user; and receive from the short message processing center (30) a short message sent by another mobile-phone user, wherein a destination receiver of the short message is determined by the short message processing center as the registered mobile-phone user; and
a service subsystem (23), configured to: mark, before the protocol gateway subsystem (22) sends the short information message to the short message processing center (30), a calling number of the short information message as the mobile-phone number of the registered mobile-phone user; and obtain from the protocol gateway subsystem (22) the short message sent by another mobile-phone user, determine a corresponding operation terminal of the registered mobile-phone user and display the short message on the corresponding operation terminal;
thereby supporting communication between the registered mobile-phone user on the computer client and another mobile-phone user;
wherein the service subsystem (23) is further configured to:
determine whether the registered mobile-phone user logs on the computer client currently when obtaining from the protocol gateway subsystem (22) the short message sent by another mobile-phone user,
the service subsystem determines the computer client as the corresponding operation terminal if the registered mobile-phone user logs on the computer client currently; the service subsystem determines the registered mobile-phone user's mobile-phone side as the corresponding operation terminal if the registered mobile-phone user doesn't log on the computer client currently,
wherein the protocol gateway subsystem (22) is further configured to:
encode, before sending the short information message to the short message processing center (30), the short information message to be standard short message protocol information; and
decode, after receiving the short message sent by another mobile-phone user, the short message to be an internal message,
the information processing system (20) further comprising:
a service platform subsystem (25), configured to coordinate duties of the handling subsystem (21), the protocol gateway subsystem (22) and the service subsystem (23);
a background counting subsystem (26), configured to count the number of the registered mobile-phone users and quantity of the short information messages sent by the registered mobile-phone user; and
a bottom-layer support subsystem (24), configured to provide a operation platform for the handling subsystem (21), the protocol gateway subsystem (22), the service subsystem (23), the service platform subsystem (25) and the background counting subsystem (26).

2. The information processing system as claimed in claim 1, wherein the handling subsystem (21), the protocol gateway subsystem (22), the service platform subsystem (25), the background counting subsystem (26) and the bottom-layer support subsystem (24) are established on a basis of a short message value-added service platform, wherein the service subsystem and the short message value-added service platform are docked to one another by an interface, or the service subsystem (23) is also established on the basis of the short message value-added service platform.

3. A communication system, **characterized by** comprising a short message processing the center (30) and the information processing system (20) according to anyone of claims 1-2:
wherein the short message processing center (30), configured to forward information sent between a registered mobile-phone user and another mobile-phone user, and record mobile-phone number information of the registered mobile-phone user.

4. The communication system as claimed in claim 3, wherein the short message processing center (30) is further configured to:
receive the short message sent by another mobile-phone user;
determine whether the destination receiver of the short message is the registered mobile-phone user according to the mobile-phone number information recorded in the short message processing center (30),
send the short message to the protocol gateway subsystem (22) of the information processing system (20) using a standard short message protocol if yes; or else, send the short message to the determination receiver's mobile phone directly.

5. A communication method, comprising:
handling a service of a registered mobile-phone user registering using mobile-phone number information and sending the mobile-phone number information to a short message processing center of a communication network to record the mobile-phone number information;
acquiring (S302) a short information message that is sent by the registered mobile-phone user through a computer client to another mobile-phone user, marking (S303) a calling number of the short information message as a mobile-phone number of the registered mobile-phone user, and sending (S304) the short information message to the short message processing center through which the short information message is forwarded to another mobile-phone user;
receiving a short message sent by another mobile user and forwarded by the short message processing center, wherein a destination receiver of the short message is determined by the short message processing center as the registered mobile-phone user; and
determining a corresponding operation terminal of the registered mobile-phone user, and displaying the short message on the corresponding operation terminal, wherein, the corresponding operation terminal comprises a mobile phone and the computer client of the registered mobile-phone user;
thereby implementing communication between the registered mobile-phone user on the computer client and another mobile-phone user;
wherein the step of determining the corresponding operation terminal comprises:
determining (S407) whether the registered mobile-phone user is online on the computer client currently, the corresponding operation terminal being the computer client if the registered mobile-phone user is online on the computer client currently; the corresponding operation terminal as the registered mobile-phone user's mobile phone if the registered mobile-phone user is not online on the computer client currently;
thereby the short message is sent to the corresponding operation terminal,
wherein the step of determining the destination receiver of the short message comprises:
the short message processing center determining (S403) whether the destination receiver of the short message is the registered mobile-phone user according to the mobile-phone number information,
the short message processing center forwarding (S405) the short message sent by another mobile-phone user if yes; or else, the short message processing center sending (S404) the short message to the destination receiver's mobile phone directly, after the step of receiving the short message sent by another mobile-phone user and forwarded by the short message processing center, the communication method further comprising:
decoding (S406) the short message so as to convert the short message into an internal message.

6. The communication method as claimed in claim 5, before the step of sending (S304) the short information message to the short message processing center, the communication method further comprising:
encoding (S304) the short information message to be standard short message protocol information.

7. The communication method as claimed in claim 5, before the step of receiving the short message sent by another mobile-phone user and forwarded by the short message processing center, the communication method further comprising:
the short message processing center receiving the short message sent by another mobile user.

## Patentansprüche

1. Informationsverarbeitungssystem (20), das Folgendes umfasst:
ein Behandlungsteilsystem (21), ausgelegt zum Behandeln eines Dienstes eines registrierten Mobiltelefonbenutzers, der sich unter Verwendung einer Mobiltelefonnummerninformation registriert, und Senden der Mobiltelefonnummerninformation an ein Kurzmitteilungsverarbeitungszentrum (30) eines Kommunikationsnetzwerks, um ein Dienstregistrierungskennzeichen im Kurzmitteilungsverarbeitungszentrum (30) zu setzen;
ein Protokollgatewayteilsystem (22), für Kommunikation mit dem Kurzmitteilungsverarbeitungszentrum (30) verbunden und ausgelegt zum:
Senden, an das Kurzmitteilungsverarbeitungszentrum (30), einer Kurzinformationsmitteilung, die von dem registrierten Mobiltelefonbenutzer an einem Computerclient an einen anderen Mobiltelefonbenutzer gesendet wird; und Empfangen, vom Kurzmitteilungsverarbeitungszentrum (30), einer von einem anderen Mobiltelefonbenutzer gesendeten Kurzmitteilung, wobei ein Zielempfänger der Kurzmitteilung durch das Kurzmitteilungsverarbeitungszentrum als der registrierte Mobiltelefonbenutzer bestimmt wird;
und ein Dienstteilsystem (23), ausgelegt zum: Kennzeichnen, bevor das Protokollgatewayteilsystem (22) die Kurzinformationsmitteilung an das Kurzmitteilungsverarbeitungszentrum (30) sendet, einer anrufenden Nummer der Kurzinformationsmitteilung als die Mobiltelefonnummer des registrierten Mobiltelefonbenutzers; und Erhalten, vom Protokollgatewayteilsystem (22), der von einem anderen Mobiltelefonbenutzer gesendeten Kurzmitteilung, Bestimmen eines zugehörigen Betriebsendgeräts des registrierten Mobiltelefonbenutzers und Anzeigen der Kurzmitteilung auf dem zugehörigen Betriebsendgerät;
dadurch die Kommunikation zwischen dem registrierten Mobiltelefonbenutzer an dem Computerclient und einem anderen Mobiltelefonbenutzer unterstützend;
wobei das Dienstteilsystem (23) ferner ausgelegt ist zum: Bestimmen,
ob der registrierte Mobiltelefonbenutzer momentan an dem Computerclient angemeldet ist, wenn vom Protokollgatewayteilsystem (22) die von einem anderen Mobiltelefonbenutzer gesendete Kurzmitteilung empfangen wird,
wobei das Dienstteilsystem den Computerclient als das zugehörige Betriebsendgerät bestimmt, wenn der registrierte Mobiltelefonbenutzer momentan an dem Computerclient angemeldet ist; wobei das Dienstteilsystem die Mobiltelefonseite des registrierten Mobiltelefonbenutzers als das zugehörige Betriebsendgerät bestimmt, wenn der registrierte Mobiltelefonbenutzer momentan nicht an dem Computerclient angemeldet ist,
wobei das Protokollgatewayteilsystem (22) ferner ausgelegt ist zum:
Codieren, vor dem Senden der Kurzinformationsmitteilung an das Kurzmitteilungsverarbeitungszentrum (30), der Kurzinformationsmitteilung in eine Standardkurzmitteilungsprotokollinformation; und
Decodieren, nach Empfangen der von einem anderen Mobiltelefonbenutzer gesendeten Kurzmitteilung, der Kurzmitteilung in eine interne Mitteilung, wobei das Informationsverarbeitungssystem (20) ferner Folgendes umfasst:
ein Dienstplattformteilsystem (25), ausgelegt zum Koordinieren der Aufgaben des Behandlungsteilsystems (21), des Protokollgatewayteilsystems (22) und des Dienstteilsystems (23);
ein Hintergrundzählungsteilsystem (26), ausgelegt zum Zählen der Anzahl der registrierten Mobiltelefonbenutzer und der Menge der von dem registrierten Mobiltelefonbenutzer gesendeten Kurzinformationsmitteilungen; und
ein Unterstützungsteilsystem auf unterster Ebene (24), ausgelegt zum Bereitstellen einer Betriebsplattform für das Behandlungsteilsystem (21), das Protokollgatewayteilsystem (22), das Dienstteilsystem (23), das Dienstplattformteilsystem (25) und das Hintergrundzählungsteilsystem (26).

2. Informationsverarbeitungssystem nach Anspruch 1, wobei das Behandlungsteilsystem (21), das Protokollgatewayteilsystem (22), das Dienstplattformteilsystem (25), das Hintergrundzählungsteilsystem (26) und das Unterstützungsteilsystem auf unterster Ebene (24) auf Grundlage einer wertschöpfenden Kurzmitteilungsdienstplattform gebildet sind, wobei das Dienstteilsystem und die wertschöpfende Kurzmitteilungsdienstplattform über eine Schnittstelle miteinander verbunden sind, oder wobei das Dienstteilsystem (23) ebenfalls auf Grundlage der wertschöpfenden Kurzmitteilungsdienstplattform gebildet ist.

3. Kommunikationssystem, **gekennzeichnet durch** Umfassen eines Kurzmitteilungsverarbeitungszentrums (30) und des Informationsverarbeitungssystems (20) nach einem der Ansprüche 1-2:
wobei das Kurzmitteilungsverarbeitungszentrum (30) ausgelegt ist zum Weiterleiten von Informationen, die zwischen einem registrierten Mobiltelefonbenutzer und einem anderen Mobiltelefonbenutzer gesendet werden, und Aufzeichnen einer Mobiltelefonnummerninformation des registrierten Mobiltelefonbenutzers.

4. Kommunikationssystem nach Anspruch 3, wobei das Kurzmitteilungsverarbeitungszentrum (30) ferner ausgelegt ist zum:
Empfangen der von einem anderen Mobiltelefonbenutzer gesendeten Kurzmitteilung;
Bestimmen, ob der Zielempfänger der Kurzmitteilung der registrierte Mobiltelefonbenutzer entsprechend der im Kurzmitteilungsverarbeitungszentrum (30) aufgezeichneten Mobiltelefonnummerninformation ist,
Senden der Kurzmitteilung an das Protokollgatewayteilsystem (22) des Informationsverarbeitungssystems (20) unter Verwendung eines Standardkurzmitteilungsprotokolls, falls ja; oder, andernfalls, direktes Senden der Kurzmitteilung an das Mobiltelefon des bestimmten Empfängers.

5. Kommunikationsverfahren, das Folgendes umfasst:
Behandeln eines Dienstes eines registrierten Mobiltelefonbenutzers, der sich unter Verwendung einer Mobiltelefonnummerninformation registriert, und Senden der Mobiltelefonnummerninformation an ein Kurzmitteilungsverarbeitungszentrum eines Kommunikationsnetzwerks zum Aufzeichnen der Mobiltelefonnummerninformation;
Erhalten (S302) einer Kurzinformationsmeldung, die von dem registrierten Mobiltelefonbenutzer über einen Computerclient an einen anderen Mobiltelefonbenutzer gesendet wird, Kennzeichnen (S303) einer anrufenden Nummer der Kurzinformationsmitteilung als eine Mobiltelefonnummer des registrierten Mobiltelefonbenutzers und Senden (S304) der Kurzinformationsmitteilung an das Kurzmitteilungsverarbeitungszentrum,
über das die Kurzinformationsmeldung an einen anderen Mobiltelefonbenutzer weitergeleitet wird;
Empfangen einer von einem anderen mobilen Benutzer gesendeten und durch das Kurzmitteilungsverarbeitungszentrum weitergeleiteten Kurzmitteilung, wobei ein Zielempfänger der Kurzmitteilung durch das Kurzmitteilungsverarbeitungszentrum als der registrierte Mobiltelefonbenutzer bestimmt wird; und
Bestimmen eines zugehörigen Betriebsendgeräts des registrierten Mobiltelefonbenutzers, und Anzeigen der Kurzmitteilung auf dem zugehörigen Betriebsendgerät, wobei das zugehörige Betriebsendgerät ein Mobiltelefon und den Computerclient des registrierten Mobiltelefonbenutzers umfasst;
dadurch Kommunikation zwischen dem registrierten Mobiltelefonbenutzer an dem Computerclient und einem anderen Mobiltelefonbenutzer umsetzend;
wobei der Schritt des Bestimmens des zugehörigen Betriebsendgeräts Folgendes umfasst:
Bestimmen (S407), ob der der registrierte Mobiltelefonbenutzer momentan online an dem Computerclient ist, wobei das zugehörige Betriebsendgerät der Computerclient ist, wenn der registrierte Mobiltelefonbenutzer momentan online an dem Computerclient ist; wobei das zugehörige Betriebsendgerät das Mobiltelefon des registrierten Mobiltelefonbenutzers ist, wenn der registrierte Mobiltelefonbenutzer momentan nicht online an dem Computerclient ist;
wodurch die Kurzmitteilung an das zugehörige Betriebsendgerät gesendet wird,
wobei der Schritt des Bestimmens des Zielempfängers der Kurzmitteilung Folgendes umfasst:
Bestimmen (S403), durch das Kurzmitteilungsverarbeitungszentrum, ob der Zielempfänger der Kurzmitteilung der registrierte Mobiltelefonbenutzer entsprechend der Mobiltelefonnummerninformation ist,
Weiterleiten (S405), durch das Kurzmitteilungsverarbeitungszentrum,
der von einem anderen Mobiltelefonbenutzer gesendeten Kurzmitteilung, falls ja; oder andernfalls, Senden (S404), durch das Kurzmitteilungsverarbeitungszentrum, der Kurzmitteilung direkt an das Mobiltelefon des Zielempfängers, wobei nach dem Schritt des Empfangens der von einem anderen Mobiltelefonbenutzer gesendeten und durch das Kurzmitteilungsverarbeitungszentrum weitergeleiteten Kurzmitteilung das Kommunikationsverfahren ferner umfasst:
Decodieren (S406) der Kurzmitteilung, um die Kurzmitteilung in eine interne Mitteilung umzuwandeln.

6. Kommunikationsverfahren nach Anspruch 5, wobei vor dem Schritt des Sendens (S304) der Kurzinformationsmitteilung an das Kurzmitteilungsverarbeitungszentrum das Kommunikationsverfahren ferner umfasst:
Codieren (S304) der Kurzinformationsmitteilung als Standardkurzmitteilungsprotokollinformation.

7. Kommunikationsverfahren nach Anspruch 5, wobei vor dem Schritt des Empfangens der von einem anderen Mobiltelefonbenutzer gesendeten und durch das Kurzmitteilungsverarbeitungszentrum weitergeleiteten Kurzmitteilung das Kommunikationsverfahren ferner umfasst:
Empfangen, durch das Kurzmitteilungsverarbeitungszentrum, der von einem anderen mobilen Benutzer gesendeten Kurzmitteilung.

## Revendications

1. Système de traitement d'informations (20), comprenant:
un sous-système de gestion (21), configuré pour gérer un service d'enregistrement d'utilisateur de téléphone mobile enregistré à l'aide d'une information de numéro de téléphone mobile et pour envoyer l'information de numéro de téléphone mobile à un centre de traitement de message court (30) d'un réseau de communication pour définir une marque d'enregistrement de service dans le centre de traitement de message court (30);
un sous-système de passerelle de protocole (22), connecté pour communication au centre de traitement de message court (30) et configuré: pour envoyer au centre de traitement de message court (30) un message court d'information envoyé par l'utilisateur de téléphone mobile enregistré sur un client ordinateur à un autre utilisateur de téléphone mobile; et pour recevoir, du centre de traitement de message court (30), un message court envoyé par un autre utilisateur de téléphone mobile, dans lequel un récepteur de destination du message court est déterminé par le centre de traitement de message court comme étant l'utilisateur de téléphone mobile enregistré; et
un sous-système de service (23), configuré: pour marquer, avant que le sous-système de passerelle de protocole (22) n'envoie le message court d'information au centre de traitement de message court (30), un numéro appelant du message court d'information en tant que numéro de téléphone mobile de l'utilisateur de téléphone mobile enregistré; et pour obtenir, du sous-système de passerelle de protocole (22), le message court envoyé par un autre utilisateur de téléphone mobile enregistré; pour déterminer un terminal d'exploitation correspondant de l'utilisateur de téléphone mobile enregistré et pour afficher le message court sur le terminal d'exploitation correspondant;
ce qui permet de prendre en charge une communication entre l'utilisateur de téléphone mobile enregistré sur le client ordinateur et un autre utilisateur de téléphone mobile;
dans lequel le sous-système de service (23) est en outre configuré:
pour déterminer si l'utilisateur de téléphone mobile enregistré se connecte à présent au client ordinateur lors de l'obtention, en provenance du sous-système de passerelle de protocole (22), du message court envoyé par un autre utilisateur de téléphone mobile,
le sous-système de service détermine le client ordinateur comme étant le terminal d'exploitation correspondant si l'utilisateur de téléphone mobile enregistré se connecte à présent au client ordinateur; le sous-système de service détermine le côté téléphone mobile de l'utilisateur de téléphone mobile enregistré comme étant le terminal d'exploitation correspondant si l'utilisateur de téléphone mobile enregistré ne se connecte pas à présent au client ordinateur,
dans lequel le sous-système de passerelle de protocole (22) est en outre configuré:
pour coder, avant l'envoi du message court d'information au centre de traitement de message court (30), le message court d'information de sorte à être des informations de protocole de messages courts standards; et
pour décoder, après la réception du message court envoyé par un autre utilisateur de téléphone mobile, le message court de sorte à être un message interne,
le système de traitement d'informations (20) comprenant en outre:
un sous-système de plate-forme de service (25), configuré pour coordonner les tâches du sous-système de gestion (21), du sous-système de passerelle de protocole (22) et du sous-système de service (23);
un sous-système de comptage en arrière-plan (26), configuré pour compter le nombre d'utilisateurs de téléphones mobiles enregistrés et la quantité de messages courts d'information envoyés par l'utilisateur de téléphones mobiles enregistré; et
un sous-système de prise en charge de couche inférieure (24), configuré pour fournir une plate-forme d'exploitation pour le sous-système de gestion (21), le sous-système de passerelle de protocole (22), le sous-système de service (23), le sous-système de plate-forme de service (25) et le sous-système de comptage en arrière-plan (26).

2. Système de traitement d'informations selon la revendication 1, dans lequel le sous-système de gestion (21), le sous-système de passerelle de protocole (22), le sous-système de plate-forme de service (25), le sous-système de comptage en arrière-plan (26) et le sous-système de prise en charge de couche inférieure (24) sont établis sur une base d'une plate-forme de service à valeur ajoutée par message court, dans lequel le sous-système de service et la plate-forme de service à valeur ajoutée par message court sont reliés l'un à l'autre au moyen d'une interface, ou le sous-système de service (23) est également établi sur la base de la plate-forme de service à valeur ajoutée par message court.

3. Système de communication, **caractérisé en ce qu'**il comprend un centre de traitement de message court (30) et le système de traitement d'informations (20) selon l'une quelconque des revendications 1 et 2;
dans lequel le centre de traitement de message court (30) est configuré pour transmettre des informations envoyées entre un utilisateur de téléphone mobile enregistré et un autre utilisateur de téléphone mobile et pour enregistrer des informations de numéro de téléphone mobile de l'utilisateur de téléphone mobile enregistré.

4. Système de communication selon la revendication 3, dans lequel le centre de traitement de message court (30) est en outre configuré:
pour recevoir le message court envoyé par un autre utilisateur de téléphone mobile;
pour déterminer si le récepteur de destination du message court est l'utilisateur de téléphone mobile enregistré en fonction des informations de numéro de téléphone mobile enregistrées dans le centre de traitement de message court (30),
pour envoyer le message court au sous-système de passerelle de protocole (22) du système de traitement d'informations (20) à l'aide d'un protocole de messages courts standards si c'est le cas; ou sinon, pour envoyer le message court directement au téléphone mobile du destinataire de détermination.

5. Procédé de communication, consistant:
à gérer un service d'enregistrement d'utilisateur de téléphone mobile enregistré à l'aide d'informations de numéro de téléphone mobile et à envoyer les informations de numéro de téléphone mobile à un centre de traitement de message court d'un réseau de communication pour enregistrer les informations de numéro de téléphone mobile;
à acquérir (S302) un message court d'information qui est envoyé par l'utilisateur de téléphone mobile enregistré au moyen d'un client ordinateur à un autre utilisateur de téléphone mobile, à marquer (S303) un numéro appelant du message court d'information en tant que numéro de téléphone mobile de l'utilisateur de téléphone mobile enregistré et à envoyer (S304) le message court d'information au centre de traitement de message court au moyen duquel le message court d'information est transmis à un autre utilisateur de téléphone mobile;
à recevoir un message court envoyé par un autre utilisateur mobile et transmis par le centre de traitement de message court, dans lequel un récepteur de destination du message court est déterminé par le centre de traitement de message court comme étant l'utilisateur de téléphone mobile enregistré; et
à déterminer un terminal d'exploitation correspondant de l'utilisateur de téléphone mobile enregistré et à afficher le message court sur le terminal d'exploitation correspondant, dans lequel le terminal d'exploitation correspondant comprend un téléphone mobile et le client ordinateur de l'utilisateur de téléphone mobile enregistré;
ce qui permet de mettre en oeuvre une communication entre l'utilisateur de téléphone mobile enregistré sur le client ordinateur et un autre utilisateur de téléphone mobile;
dans lequel l'étape de détermination du terminal d'exploitation correspondant consiste:
à déterminer (S407) si l'utilisateur de téléphone mobile enregistré est à présent en ligne sur le client ordinateur, le terminal d'exploitation correspondant étant le client ordinateur si l'utilisateur de téléphone mobile enregistré est à présent en ligne sur le client ordinateur; le terminal d'exploitation correspondant étant le téléphone mobile de l'utilisateur de téléphone mobile enregistré si l'utilisateur de téléphone mobile enregistré n'est pas à présent en ligne sur le client ordinateur;
de ce fait, le message court est envoyé au terminal d'exploitation correspondant,
dans lequel l'étape de détermination du récepteur de destination du message court comprend les étapes suivantes:
le centre de traitement de message court détermine (S403) si le récepteur de destination du message court est l'utilisateur de téléphone mobile enregistré en fonction des informations de numéro de téléphone mobile,
le centre de traitement de message court transmet (S405) le message court envoyé par un autre utilisateur de téléphone mobile si c'est le cas; ou
sinon, le centre de traitement de message court envoie (S404) le message court directement au téléphone mobile du récepteur de destination après l'étape de réception du message court envoyé par un autre utilisateur de téléphone mobile et transmis par le centre de traitement de message court,
le procédé de communication consistant en outre:
à décoder (S406) le message court de sorte à convertir le message court en message interne.

6. Procédé de communication selon la revendication 5, avant l'étape d'envoi (S304) du message court d'information au centre de traitement de message court, le procédé de communication consistant en outre:
à coder (S304) le message court d'information de sorte à être des informations de protocole de messages courts standards.

7. Procédé de communication selon la revendication 5, avant l'étape de réception du message court envoyé par un autre utilisateur de téléphone mobile et transmis par le centre de traitement de message court, le procédé de communication comprenant en outre l'étape suivante:
le centre de traitement de message court reçoit le message court envoyé par un autre utilisateur mobile.
